# EUROPEAN PATENT APPLICATION

(11) **EP 4 697 670 A1**
(43) Date of publication of application: **18.02.2026**
(21) Application number: 24755179.9
(22) Date of filing: 03.06.2024
(51) Int. Cl.: H04L 45/24, H04L 47/11, H04L 47/31

(54) **IN-SITU FLOW TELEMETRY INFORMATION CONFIGURATION METHOD AND APPARATUS, AND NETWORK DEVICE AND STORAGE MEDIUM**

(71) Applicant: New H3C Technologies Co., Ltd., Hangzhou, Zhejiang 310052 (CN)
(72) Inventor: DU, Wei, Beijing 100102 (CN)
(74) Representative: IPAZ
(86) International application number: PCT/CN2024/097061
(87) International publication number: WO 2025/251169

(57) **Abstract**

The examples of the present disclosure provide an IFIT information configuration method, apparatus, a network device and a storage medium, which relates to the field of communication technology. The method is applied to a tail node, the method includes: receiving a first BGP update packet from a head node, and the first BGP update packet includes IFIT configuration information; receiving a first service packet from the head node through a first path, the first service packet includes a first IFIT option, and the first IFIT option includes first indication information; if a value of the first indication information is a first value, generating a service flow identification rule based on the configuration information, and the service flow identification rule is to identify a service flow requiring IFIT, and the service flow is transmitted through a second path, and the second path is a forwarding path from the tail node to the head node, and the first path and the second path pass through a same intermediate node. The efficiency of service packet forwarding can be improved.

## Description

### TECHNICAL FIELD

Examples of the present disclosure relate to the field of communication technology, and in particular to an IFIT information configuration method, apparatus, a network device, and a storage medium.

### BACKGROUND

IFIT (in-situ Flow Information Telemetry) is an IOAM (in-situ Operation Administration and Maintenance) monitor technology that can directly measure parameters such as true packet loss rate and delay of a service packet. It has the advantages of easy deployment and high statistical accuracy.

Currently, if bidirectional IFIT is required, an extended field can be added to the service packet sent by a head node, so that reverse IFIT information is carried through the extended field, such as 5-tuple of the service flow that requires reverse IFIT.

However, after inserting this information into the service packet, the service packet will be increased. Further, the service packet that does not need to be sent in shards originally may need to be sent in shards, which increases the number of times forwarding table is searched when forwarding service packets, reduces forwarding efficiency. In addition, the bandwidth required to carry the service packet increases, which also reduces forwarding efficiency.

### SUMMARY

In view of the above, the present disclosure provides an IFIT information configuration method, apparatus, a network device and a storage medium, so as to solve the problem of low forwarding efficiency.

In a first aspect, an example of the present disclosure provides an IFIT information configuration method, which is applied to a tail node, the method includes:
receiving a first BGP update packet from a head node, wherein the first BGP update packet includes IFIT configuration information;
receiving a first service packet from the head node through a first path, wherein the first service packet includes a first IFIT option, and the first IFIT option includes first indication information;
if a value of the first indication information is a first value, generating a service flow identification rule based on the configuration information, wherein the service flow identification rule is to identify a service flow requiring IFIT, and the service flow is transmitted through a second path, the second path is a forwarding path from the tail node to the head node, and the first path and the second path pass through a same intermediate node.

In a second aspect, an example of the present disclosure provides an IFIT information configuration method, which is applied to a head node, the method includes:
sending a first BGP update packet to a tail node, wherein the first BGP update packet includes IFIT configuration information;
receiving a first service packet;
sending a second service packet to the tail node through a first path, wherein the second service packet includes a first IFIT option, the first IFIT option includes first indication information, the first indication information is to indicate whether the tail node generates a service flow identification rule based on the configuration information, the service flow identification rule is to identify a service flow requiring IFIT, the service flow is transmitted through a second path, the second path is a forwarding path from the tail node to the head node, and the first path and the second path pass through a same intermediate node.

In a third aspect, an example of the present disclosure provides an IFIT information configuration apparatus, which is applied to a tail node, the apparatus includes:
a receiving module, to receive a first BGP update packet from a head node, wherein the first BGP update packet includes IFIT configuration information; and to receive a first service packet from the head node through a first path, wherein the first service packet includes a first IFIT option, and the first IFIT option includes first indication information;
a generation module, if a value of the first indication information is a first value, to generate a service flow identification rule based on the configuration information, wherein the service flow identification rule is to identify a service flow requiring IFIT, and the service flow is transmitted through a second path, the second path is a forwarding path from the tail node to the head node, and the first path and the second path pass through a same intermediate node.

In a fourth aspect, an example of the present disclosure provides an IFIT information configuration apparatus, which is applied to a head node, the apparatus includes:
a sending module, to send a first BGP update packet to a tail node, wherein the first BGP update packet includes IFIT configuration information;
a receiving module, to receive a first service packet;
the sending module, further to send a second service packet to the tail node through a first path, wherein the second service packet includes a first IFIT option, the first IFIT option includes first indication information, the first indication information is to indicate whether the tail node generates a service flow identification rule based on the configuration information, the service flow identification rule is to identify a service flow requiring IFIT, the service flow is transmitted through a second path, the second path is a forwarding path from the tail node to the head node, and the first path and the second path pass through a same intermediate node.

In a fifth aspect, an example of the present disclosure provides a network device, which is applied to a tail node, the network device includes: a processor; a transceiver; a machine-readable storage medium, storing machine-executable instructions thereon that can be executed by the processor; the machine-executable instructions cause the processor to:
receive a first BGP update packet from a head node, wherein the first BGP update packet includes IFIT configuration information;
receive a first service packet from the head node through a first path, wherein the first service packet includes a first IFIT option, and the first IFIT option includes first indication information;
if a value of the first indication information is a first value, generate a service flow identification rule based on the configuration information, wherein the service flow identification rule is to identify a service flow requiring IFIT, and the service flow is transmitted through a second path, the second path is a forwarding path from the tail node to the head node, and the first path and the second path pass through a same intermediate node.

In a sixth aspect, an example of the present disclosure provides a network device, which is applied to a head node, the network device includes a processor; a transceiver; a machine-readable storage medium, storing machine-executable instructions thereon that can be executed by the processor; the machine-executable instructions cause the processor to:
send a first BGP update packet to a tail node, wherein the first BGP update packet includes IFIT configuration information;
receive a first service packet;
send a second service packet to the tail node through a first path, wherein the second service packet includes a first IFIT option, the first IFIT option includes first indication information, the first indication information is to indicate whether the tail node generates a service flow identification rule based on the configuration information, the service flow identification rule is to identify a service flow requiring IFIT, the service flow is transmitted through a second path, the second path is a forwarding path from the tail node to the head node, and the first path and the second path pass through the same intermediate node.

In a seventh aspect, an example of the present disclosure provides a machine-readable storage medium, which stores machine-executable instructions thereon, that when called and executed by a processor, cause the processor to: carry out the method described in the above first aspect.

In an eighth aspect, an example of the present disclosure provides a computer program product containing instructions that, when running on a computer, cause the computer to carry out the method described in the above first aspect.

By adopting the above technical solution, the tail node can receive the first BGP update packet from the head node, wherein the first BGP update packet includes the IFIT configuration information, and then receive the first service packet from the head node, wherein the first service packet includes a first IFIT option, and the first IFIT option includes the first indication information. If a value of the first indication information is a first value, it means that the head node indicates the tail node to automatically generate a service flow identification rule, and then the tail node generates the service flow identification rule based on the configuration information. The service flow identification rule is to identify a service flow requiring IFIT, and the service flow is transmitted through the second path, which is a forwarding path from the tail node to the head node, and the first path and the second path pass through a same intermediate node. It can be seen that in the above process, the head node can notify the IFIT configuration information to the tail node through the first BGP update packet, and then there is no need to carry the above-mentioned IFIT configuration information in each service packet of the forward service flow, which can avoid increasing the size of the service packet and improve the forwarding efficiency.

### BRIEF DESCRIPTION OF THE DRAWINGS

The accompanying drawings described here are used to provide a further understanding of the present disclosure and constitute a part of the same. The illustrative examples of the present disclosure and their descriptions are used to explain the present disclosure and do not constitute an improper limitation of the present disclosure.
Figure 1 is an exemplary schematic diagram of a structure of an IFIT network provided by an example of the present disclosure;
Figure 2 is a structure schematic diagram of a service packet in the related art;
Figure 3 is a flow chart of an IFIT information configuration method provided by an example of the present disclosure;
Figure 4 is a schematic diagram of an IFIT option provided by an example of the present disclosure;
Figure 5 is a flow chart of a method for a tail node to generate a service flow identification rule provided by an example of the present disclosure;
Figure 6 is a structure schematic diagram of IFIT Attributes TLV provided by an example of the present disclosure;
Figure 7 is a structure schematic diagram of a first sub-TLV provided by an example of the present disclosure;
Figure 8 is a structure schematic diagram of an extension flow monitor type identifier in a first sub-TLV provided by an example of the present disclosure;
Figure 9 is a structure schematic diagram of a second sub-TLV provided by an example of the present disclosure;
Figure 10 is a structure schematic diagram of encapsulation information in a second sub-TLV provided by an example of the present disclosure;
Figure 11 is a flow chart of another IFIT information configuration method provided by an example of the present disclosure;
Figure 12 is an exemplary schematic diagram of an SRv6 networking structure provided by an example of the present disclosure;
Figure 13 is an interaction flow chart of an IFIT information configuration method provided by an example of the present disclosure;
Figure 14 is a structure schematic diagram of an IFIT information configuration apparatus provided by an example of the present disclosure;
Figure 15 is a structure schematic diagram of another IFIT information configuration apparatus provided by an example of the present disclosure;
Figure 16 is a structure schematic diagram of a network device provided by an example of the present disclosure;
Figure 17 is a structure schematic diagram of another network device provided by an example of the present disclosure.

### DETAILED DESCRIPTION

In order to make the objective, technical solutions and advantages of the present disclosure clearer and more understandable, the present disclosure will be described in more detail below with reference to the accompanying drawings and examples. Obviously, the described examples are only some, and not all, of the examples of the present disclosure. All other examples obtained based on the examples of the present disclosure by those skilled in the art fall into the scope of protection of the present disclosure.

For ease of understanding, relevant concepts involved in the examples of the present disclosure are first introduced.

The IFIT technology in the examples of the present disclosure is IOAM-based IFIT technology, that is, a service packet transmitted in an IFIT networking carries IFIT data. After each device in the IFIT networking identifies the IFIT data included in the service packet, this device can report measurement data to an analyzer based on the IFIT data.

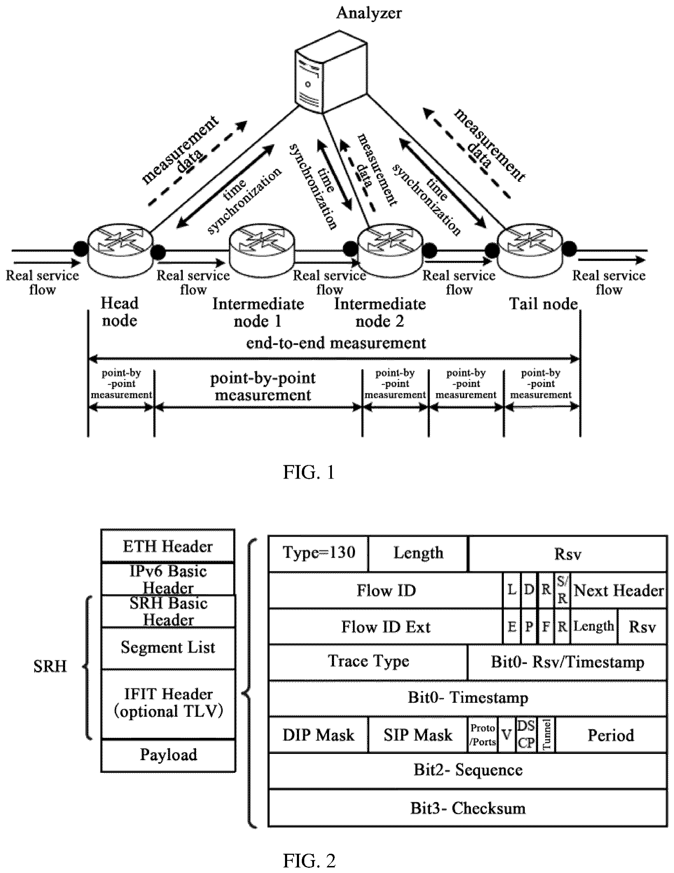

As shown in Figure 1, which is an exemplary schematic diagram of a structure of an IFIT network provided by an example of the present disclosure. The IFIT network includes a head node, multiple intermediate nodes and a tail node. Figure 1 exemplarily shows two intermediate nodes, an intermediate node 1 and an intermediate node 2 respectively, wherein the intermediate node 1 fails to support IFIT, and the intermediate node 2 supports IFIT.

The head node is to receive a real service flow, if it is determined that IFIT is required for the service flow, then it sends the measurement data of the service flow to the analyzer, adds IFIT data to the service flow, and forwards the service flow carrying the IFIT data to the intermediate node 1 connected to itself. Since the intermediate node 1 fails to support IFIT, the service flow is directly forwarded to the intermediate node 2.

The intermediate node 2 is to receive the service flow, and if it is identified that the service flow includes IFIT data, and a monitor type indicated by the IFIT data is point-by-point measurement, then it sends the measurement data of the service flow to the analyzer based on the IFIT data, and forwards the service flow to the tail node. Alternatively, if the monitor type indicated by the IFIT data is end-to-end measurement, there is no need to send the measurement data to the analyzer, and the service flow can be forwarded to the tail node.

The tail node is to receive the service flow, and if it is identified that the service flow includes IFIT data, then it sends the measurement data of the service flow to the analyzer based on the IFIT data, deletes the IFIT data in the service flow, and then forwards the service flow.

The analyzer is to receive the measurement data sent by the head node, intermediate node and tail node, and to summarize and calculate the received measurement data. Both the analyzer and the device supporting IFIT are running clock synchronization protocols. In Figure 1, the head node, intermediate node 2 and tail node all requires for PTP (Precision Time Protocol) time synchronization with the analyzer.

The advantage of IFIT technology is easy to deploy, by deploying an instance of a measurement parameter included in IFIT on the head node and enabling a IFIT function on the intermediate and tail nodes, the intermediate and tail nodes can complete measurement and report measurement data.

If bidirectional measurement is required, such as bidirectional packet loss, bidirectional delay, or bidirectional jitter, etc., it is required to configure an instance of reverse IFIT on the tail node. However, as the network becomes more and more complex and there are more and more devices in the network, users must be familiar with various traffic forwarding paths in the current network, so that it can be achieved to configure the head and tail nodes of each forwarding path, which is complex and cumbersome.

In order to reduce configuration workload, the head node can currently add an extended field in an IFIT header of the service packet, so as to carry information of the service flow that requires reverse IFIT through the extended field, such as the 5-tuple of the service flow. As shown in Figure 2, the service packet includes an ETH (Ethernet) header, an IPv6 (Internet Protocol Version 6) basic header, a Segment Routing Header (SRH) and a payload. Wherein, the SRH includes an SRH basic header, a Segment List, and the IFIT header. The IFIT header is one optional TLV in the SRH.

The IFIT header is a TLV structure, and the IFIT header includes a boot tag, a basic header, and an extended header.

The boot tag includes Type, Length, and Rsv (Reserved field). The value of Type can be 130.

The basic header is to carry forward IFIT information, specifically including Flow ID, L, D, R, S/R, Next Header (next header), Flow ID Ext (flow identifier extension), E, P, F, R, Len, Rsv, and Trace Type.

Flow ID and Flow ID Ext are IDs of the service flow that requires IFIT, used to uniquely identify one service flow.

L is a packet loss measurement coloring flag.

D is a delay measurement coloring flag.

S/R, if the boot tag is at bottom of stack, this field is S and the value is 1; if the boot tag is not the bottom of stack, this field is R and the value is 0.

E, is a statistics mode, when the value is 0, indicating that a hop-by-hop statistics mode is used, and when the value is 1, indicating that an end-to-end statistics mode is used.

P, to prevent Probe Marker mismatch during IPv4 encapsulation, when the value is 1, indicating mismatching with no statistics required.

F, is an identifier of the forward service flow, when the value is 1, indicating a forward service flow.

Len is extended length.

Trace Type, a Metadata indication bit, which is represented by a bitmap. R and Rsv are both reserved fields.

The extended header is to carry configuration information of the reverse service flow, specifically including Bit0, Bit1, Bit2 and Bit3.

Bit0 is Rsv or Timestamp, the Timestamp is to measure packet-by-packet delay and occupies 6 bytes; wherein the first 2 bytes represent seconds, and the last 4 bytes represent nanoseconds.

Bit1, is a control field, which is to carry control information such as flow characteristics and synchronization period of the reverse service flow. For example, it can include DIP Mask (destination IP address mask), SIP Mask (source IP address mask), Proto/Ports (protocol/ port), V, DSCP (Differentiated Services Code Point), Tunnel, and Period (synchronization period) of the reverse service flow.

Wherein, the Proto/ Ports represents a protocol enabling flag, a source port number enabling flag, and a destination port number enabling flag. When the value of the protocol enabling flag is 1, it means that it is necessary to determine the reverse service flow requiring IFIT based on a protocol name; when the value of the source port number enabling flag is 1, it means that it is necessary to determine the reverse service flow requiring IFIT based on the source port number; when the value of the destination port number enabling flag is 1, it means that it is necessary to determine the reverse service flow requiring IFIT based on the destination port number.

V, representing whether the reverse service flow requires IFIT, when the value is 1, indicates that the reverse service flow requires IFIT.

DSCP, represents whether it is necessary to determine the reverse service flow requiring IFIT based on DSCP.

Tunnel, represents whether tunnel-level IFIT is required.

Period is a synchronization reporting period in seconds.

Bit2 is Sequence, for out-of-order monitor and occupying 4 bytes.

Bit3 is Checksum, to implement packet modification monitor, occupying 4 bytes.

In Figure 2, Bit0, Bit1, Bit2 and Bit3 included in the extended header are all reverse IFIT information, occupying a total of 4 bytes. If a 4-byte extended header is inserted into each service packet, the payload will increase, the bandwidth required to transmit the service flow will increase, and the forwarding efficiency will be reduced. For example, assuming that the length of one service packet is 500 bytes, an additional 4-byte extended header needs to be inserted into the service packet. For a 10G port, 80M bandwidth is required to transmit the extended header, which will reduce the forwarding efficiency of the service packet.

Moreover, the service packet may not need to be sent in shards originally, but after the 4-byte extended header is inserted into the service packet, the service packet may need to be sent in shards, further increasing the number of times the forwarding table is searched when sending the packet, and further reducing the forwarding efficiency.

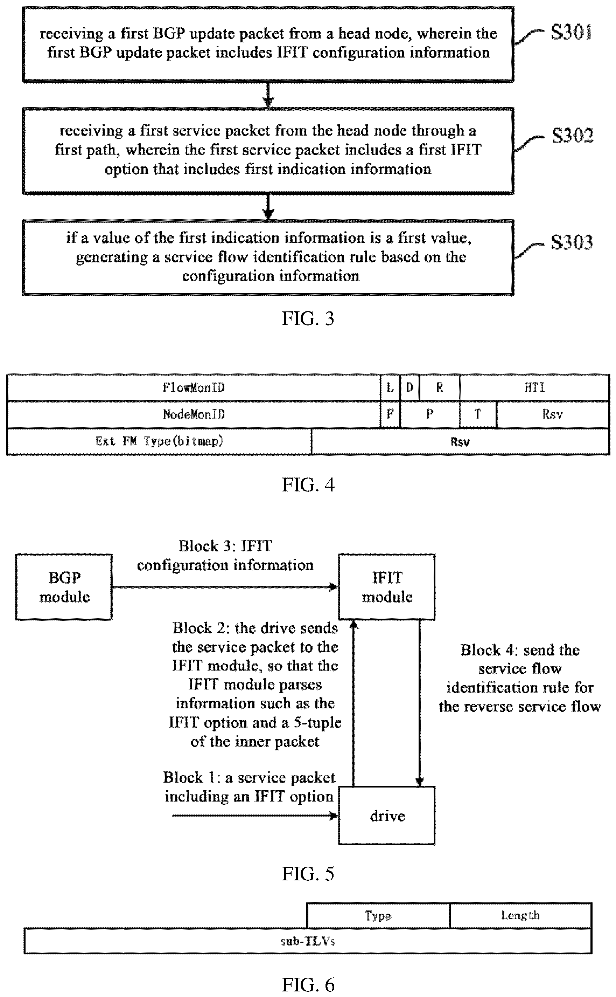

In order to solve the above problem, an example of the present disclosure provides an IFIT information configuration method, which is applied to a tail node, as shown in Figure 3, the method includes:
S301, receiving a first BGP (Border Gateway Protocol) update packet from a head node, wherein the first BGP update packet includes IFIT configuration information.

Wherein, a forwarding path from the head node to the tail node is a first path, and the head node is configured with IFIT information of a forward service flow and IFIT information of a reverse service flow, and IFIT information can specifically include a flow characteristics and configuration information for IFIT service flow. In the example of the present disclosure, the forward service flow is a service flow transmitted from the head node to the tail node, that is, a service flow transmitted through the first path. The reverse service flow is a service flow transmitted from the tail node to the head node, that is, a service flow transmitted through a second path.

After the head node is configured with IFIT information of a forward service flow and IFIT information of a reverse service flow, it can be determined that bidirectional IFIT is required, thereby sending the first BGP update packet to the tail node.

S302: receiving a first service packet from the head node through a first path, wherein the first service packet includes a first IFIT option that includes first indication information.

Wherein after the head node receiving the service packet, if it is determined that the service packet matches the IFIT information of a forward service flow, that is, the service packet is a service packet that requires IFIT, a first IFIT option can be inserted into the service packet to obtain the first service packet. Then, along the first path between the head and tail nodes, the first service packet is transmitted to the tail node of the first path.

Wherein, the first IFIT option includes IFIT data of the forward service flow.

As an example, the first IFIT option is shown in Figure 4, and specifically includes the following fields:
FlowMonID (flow identifier), occupying 20 bits, and used to uniquely identify one service flow;
L, occupying 1 bit, a packet loss measurement coloring flag;
D, occupying 1 bit, a delay measurement coloring flag;
HTI (Header Type Indication), occupies 8 bits, to represent the carried extended data type, when the value is 0, indicating a reserved field, when the value is 1 to 15, indicating that private extended data is carried, and when the value is 16 to 255, indicating that standard extended data is carried. In the example of the present disclosure, the value of HTI can be 16;
NodeMonID (device node identifier), occupies 20 bits, to uniquely identify one node in the IFIT network. When the head node encapsulates the IFIT option for the service packet, it can add its own node identifier in this field;
F, occupies 1 bit and is a service flow direction identifier, to carry the first indication information. When the value is 1, it indicates that self-learning of the reverse service flow is required, that is, the tail node needs to generate the identification rule for the reverse service flow based on the flow characteristics of the forward service flow, and trigger the **IFIT** for the reverse service flow;
P, occupies 3 bits and is a measurement period. When the value is 000, it indicates the measurement period is 1 second; when the value is 001, it indicates the measurement period is 10 seconds; when the value is 010, it indicates the measurement period is 30 seconds; when the value is 011, it indicates the measurement period is 60 seconds; when the value is 100, it indicates the measurement period is 300 seconds; measurement periods corresponding to the other possible values are temporarily reserved and can be set later according to the actual measurement requirements.

T, occupies 2 bits, to indicate a monitor type. When the value is 00, the corresponding monitor type is temporarily reserved; when the value is 01, the corresponding monitor type is end-to-end monitor; when the value is 10, the corresponding monitor type is hop-by-hop monitor; when the value is **11,** the corresponding monitor type is temporarily reserved and can be set later based on actual measurement requirements.

Ext FM Type (Extension Flow Monitor Type), occupies 16 bits and can be identified in the form of a bitmap.

R (1 bit), Rsv (6 bits) and Reserved (16 bits) are reserved fields.

S303, if the value of the first indication information is a first value, generating a service flow identification rule based on the configuration information.

The service flow identification rule is to identify the service flow that requires IFIT. The service flow is transmitted through the second path, which is a forwarding path from the tail node to the head node, and the first path and the second path pass through the same intermediate node.

For example, in Figure 1, the forwarding path composed of the head node, intermediate node 1, intermediate node 2, and tail node is the first path. The forwarding path composed of the tail node, intermediate node 2, intermediate node 1, and head node is the second path, and the tail node in Figure 1 is the head node of the second path, and the head node in Figure 1 is the tail node of the second path.

Wherein, the first indication information is a F field in Figure 4, and the first value can be 1, that is, when the value of the F field is 1, it indicates that the tail node requires self-learning of the reverse service flow, and then the tail node can automatically generate a service flow identification rule based on the configuration information of the reverse service flow in the first BGP update packet.

The service flow identification rule is an ACL (Access Control List) rule, which specifically includes the flow characteristics of the reverse service flow that requires IFIT, and may also include parameters of the IFIT such as the monitor type and the statistical period.

By adopting this method, the tail node can receive the first BGP update packet from the head node, wherein the first BGP update packet includes the IFIT configuration information, and then receive the first service packet from the head node, wherein the first service packet includes the first IFIT option, and the first IFIT option includes the first indication information. If the value of the first indication information is the first value, it means that the head node indicates the tail node to automatically generate a service flow identification rule, and then the tail node generates the service flow identification rule based on the configuration information. The service flow identification rule is to identify the service flow that requires IFIT, and the service flow is transmitted through the second path, which is the forwarding path from the tail node to the head node, the second path and the first path passes through the same intermediate node. It can be seen that in the above process, the head node can notify the IFIT configuration information to the tail node through the first BGP update packet, and then there is no need to carry the above-mentioned IFIT configuration information in each service packet of the forward service flow, which can avoid increasing the size of the service packet and improve the forwarding efficiency.

In some examples of the present disclosure, the configuration information includes a tunnel-level enabling flag, which is to indicate whether to perform reverse IFIT based on the tunnel. Accordingly, generating a service flow identification rule based on the configuration information in S303 above can be implemented as:
If the value of the tunnel-level enabling flag is the first value, a first-type service flow identification rule is generated. Wherein the first-type service flow identification rule includes an SL (Segment List) identifier, and the path indicated by the segment list identifier is the second path, which constitutes a transmission tunnel.

Wherein, reverse IFIT based on tunnel refers to perform reverse IFIT on all service flows transmitted through a specific tunnel. For example, in Figure 1, a transmission tunnel corresponding to the first service packet is a transmission tunnel from the head node to the tail node, and accordingly, the transmission tunnel composed of the second path is a transmission tunnel from the tail node to the head node. Assuming that the intermediate node 2 in Figure 1 is an endpoint node and the intermediate node 1 is not an endpoint node, the segment list of the reverse transmission tunnel includes an SID (Segment Identifier) of the tail node in Figure 1, an SID of the intermediate node 2, and an SID of the head node.

In the related art, in order to avoid the service packet being too large, through adding the above F field to the IFIT option to indicate that the tail node requires self-learning of the reverse service flow. In this way, the tail node can only generate a service flow identification rule based on the 5-tuple of the reverse service flow, and tunnel-level monitor cannot be achieved. However, by adopting the method of the example of the present disclosure, the IFIT configuration information is notified through the first BGP update packet, and the configuration information also includes a tunnel-level enable flag, which not only avoids the service packet being too large, but also enables flexible selection of whether to perform tunnel-level IFIT.

In some examples of the present disclosure, the first service packet includes an original packet, which includes multiple first flow characteristics; the configuration information also includes enabling information of multiple second flow characteristics. It can be understood that the multiple first flow characteristics are flow characteristics of the forward service flow, and the multiple second flow characteristics are flow characteristics of the reverse service flow.

On this basis, generating a service flow identification rule based on the configuration information in S303 above can be implemented as:
if the value of the tunnel enabling flag is a second value, then obtaining a value of each second flow characteristic from multiple first flow characteristics based on each enabled second flow characteristic indicated by the enabling information; generating a second-type service flow identification rule based on values of the second flow characteristics.

That is, the second-type service flow identification rule includes values of flow characteristics of the reverse service flow.

Wherein the multiple first flow characteristics may include a 5-tuple of the forward service flow, and may also include other information that can represent the forward service flow, such as DSCP.

The enabling information of the multiple second flow characteristics may include a SIP Mask, a DIP Mask, DSCP enabling information, protocol number enabling information, source port enabling information, and destination port enabling information.

Through the SIP Mask and the destination IP address in the 5-tuple of the forward service flow, the source IP address network segment of the reverse service flow that requires IFIT can be obtained. For example, if the SIP Mask is 24 and the destination IP address of the forward service flow is 2.2.2.0, the source IP address network segment of the reverse service flow is 2.2.2.0/24. Accordingly, the second-type service flow identification rule includes the source IP address network segment.

Similarly, the destination IP address network segment of the reverse service flow that requires IFIT can be obtained through the DIP Mask and the source IP address in the 5-tuple of the forward service flow. Accordingly, the second-type service flow identification rule includes the destination IP address network segment.

Furthermore, if the DSCP enabling information is enabled, the second-type service flow identification rule includes the DSCP of the reverse service flow; if the DSCP enabling information is disabled, the second-type service flow identification rule does not include the DSCP of the reverse service flow.

Similarly, if the protocol number enabling information is enabled, the protocol number is obtained from the multiple first flow characteristics, and used as the protocol number of the reverse service flow. Accordingly, the second-type service flow identification rule also includes the protocol number of the reverse service flow.

If the source port enable information is enabled, the destination port number is obtained from the multiple first flow characteristics, and used as the source port number of the reverse service flow. Accordingly, the second-type service flow identification rule also includes the source port number of the reverse service flow.

If the destination port enable information is enabled, the source port number is obtained from the multiple first flow characteristics, and used as the destination port number of the forward service flow. Accordingly, the second-type service flow identification rule also includes the destination port number of the reverse service flow.

In the example of the present disclosure, after a data plane of the tail node receives the first service packet (i.e., a first service packet) carrying the first IFIT option, it will send the first service packet to a control plane, and the control plane will generate a service flow identification rule, and then store the service flow identification rule in a forwarding plane.

Furthermore, when the data plane of the tail node receives a second service packet that complies with the service flow identification rule, the second service packet is encapsulated with a second IFIT option to obtain a third service packet, and the third service packet is transmitted to the head node through a second path.

Wherein the second IFIT option has the same structure as the first IFIT option, and the F field value in the second IFIT option is 0.

The following is a method for generating a service flow identification rule in a tail node, which is described in conjunction with a specific example, as shown in Figure 5, the tail node includes a BGP module, an IFIT module, and a drive, wherein the BGP module and the IFIT module are both located in a control plane of the tail node, and the drive is located in the data plane of the tail node. The method includes:
Block 1, the drive receives a service packet including an IFIT option.

After receiving the service packet, the drive can check an F field in the IFIT option of the service packet, if the F field is set (i.e., the value is 1) and the service packet is the first packet of the same service flow, executing Block 2.

Block 2, the drive sends the service packet to the IFIT module, so that the IFIT module parses information such as the IFIT option and a 5-tuple of the inner packet.

Wherein, the IFIT module can obtain information related to the IFIT from the IFIT option of the service packet, that is, the information shown in Figure 4. It can also obtain an original packet encapsulated in the inner layer of the service packet (also referred to as inner packet), and obtain a flow characteristic of the forward service flow from the inner packet, such as the 5-tuple and DSCP, the 5-tuple includes the source IP address, destination IP address, protocol number, source port number and destination port number.

Block 3, the IFIT module obtains the IFIT configuration information from the BGP module.

The IFIT configuration information is configuration information synchronized by the head node through the first BGP update packet, and includes the tunnel-level enabling flag and enabling information of each flow characteristic of the reverse service flow.

The IFIT module can generate the service flow identification rule for the reverse service flow based on the configuration information and the flow characteristic of the forward service flow.

As an example, if the tunnel-level enabling flag is not set (i.e., the value is 0), and the flow characteristics of the forward service flow include SIP (source IP address): 1.1.1.1, DIP (destination IP address): 2.2.2.2, DSCP: 8, PRO (protocol): UDP, SPORT (source port): 100, DPORT (destination port): 200.

The enabling information of each flow characteristic of the reverse service flow in the configuration information is: SIPMASK (source IP address mask): 24, DIPMASK (destination IP address mask): 24, DSCP:0, PRO (protocol): 1, SPORT (source port): 0, DPORT (destination port): 0. Wherein, "1" in the enabling information represents enabled, and "0" represents disabled.

Further the service flow identification rule for the reverse service flow generated by the IFIT module includes SIP:2.2.2.0/24, DIP:1.1.1.0/32, PRO: UDP. This service flow identification rule is to indicate that if the tail node is a head node, the source IP address of the received service packet belongs to the 2.2.2.0/24 network segment, the destination IP address belongs to 1.1.1.0/32, and the protocol is UDP, then IFIT is required for the service packet.

Block 4, the IFIT module sends the service flow identification rule for the reverse service flow to the drive.

By adopting this method, the control plane generates the service flow identification rule for the reverse service flow, and then sends it to the data plane, which can reduce the impact on the data plane, and then reduce the payload of the data plane, thereby reducing the payload of the tail node and improving the forwarding efficiency of service packet. Moreover, the tail node can dynamically and automatically generate the service flow identification rule for the reverse service flow without manual configuration, which can reduce the workload of configuration and maintenance.

The following is a detailed introduction to the first BGP update packet in the example of the present disclosure.

At both ends of the SRv6 tunnel, that is, between the head node and the tail node, routing information can be synchronized through the BGP protocol. In the example of the present disclosure, the reverse IFIT configuration information can be synchronized through the first BGP update packet.

The first BGP update packet includes an SR Policy Subsequent Address Family Identifier (SAFI) Network Layer Reachability Information (NLRI) field.

The SR Policy SAFI NLRI field includes Tunnel Encaps Attribute, the tunnel type of which is SR Policy Type (value of 15). In the example of the present disclosure, one sub-TLV, i.e. IFIT Attributes TLV, can be newly added to the Tunnel Encaps Attribute, so as to use the IFIT Attributes TLV to carry the reverse IFIT configuration information.

The location of IFIT Attributes in the SR Policy SAFI NLRI field is as follows:
SR Policy SAFI NLRI:<Distinguisher, policy-Color, Endpoint>
Attributes:
   Tunnel Encaps Attribute (23)
   Tunnel Type: SR Policy Type (15)
   Binding SID
   SRv6 Binding SID
   Prefence
   Priority
   Policy Name
   Policy Candidate Path Name
   Explicit NULL Lable Policy
   **IFIT Attributes**
   Segment List
   Weight ... ...

The structure of the IFIT Attributes TLV is shown in Figure 6, which includes the following fields:
Type: occupies 8 bits and indicates the encapsulation attribute type.
Length: occupies 8 bits and indicates the length of a subsequent sub-TLV, excluding the length of Type and Length.

Sub-TLVs are to carry reverse IFIT configuration information, including at least one sub-TLV.

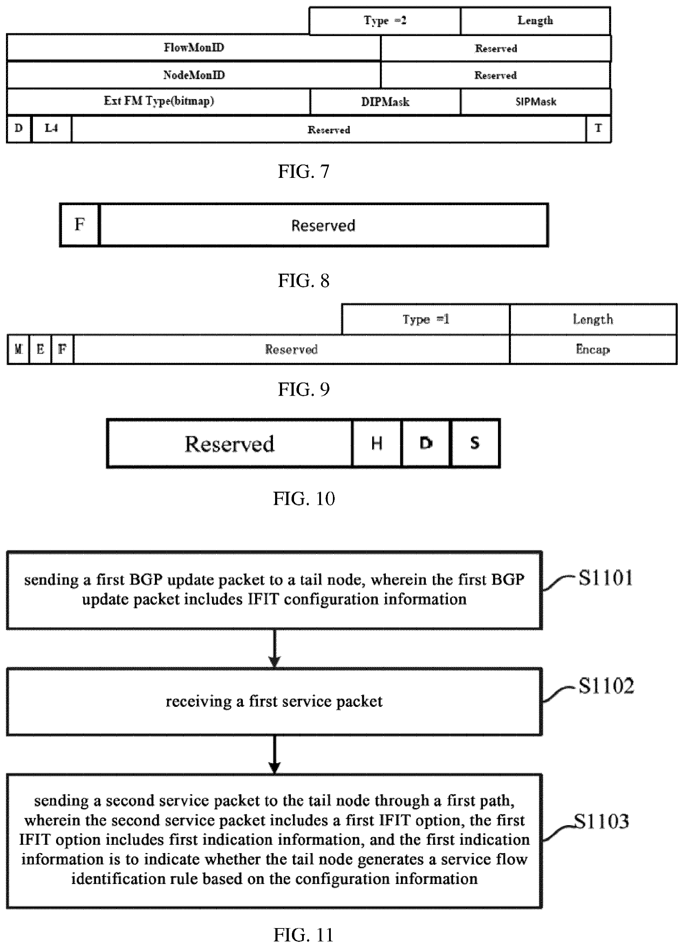

Wherein the at least one sub-TLV includes a first sub-TLV, and the structure of the first sub-TLV is shown in Figure 7 and includes the following fields:
Type: occupies 8 bits and indicates the type of the first sub-TLV, such as, the value of the Type field can be 2.
Length: occupies 8 bits and indicates the length of the Value field;
the field after Length belongs to value field.

The value field includes:
flow identifier (FlowMonID): occupies 20 bits, is unique within the device, and is to uniquely identify one service flow;
device node identifier (NodeMonID): occupies 20 bits, and is to uniquely identify one device in the IFIT network;
extension flow monitor type identifier (Ext FM Flag): occupies 20 bits;
enabling information of multiple second flow characteristics;
tunnel-level enabling flag.

Wherein, the multiple second flow characteristics include destination IP address, source IP address, DSCP, protocol name, destination port and source port.

Accordingly, the enabling information of the multiple second flow characteristics includes:
DIP Mask: occupies 8 bits, and is to indicate whether each bit of the destination IP address is enabled;
SIP Mask: occupies 8 bits, and is to indicate whether each bit of the source IP address is enabled;
D-Flag, occupies 1 bit, and is to indicate whether the above DSCP is enabled. When the value is 1, meaning that DSCP is enabled; when the value is 0, meaning that DSCP is disenabled;
L4-Flag: occupies 3 bits, of which the first bit indicates whether the protocol name in the multiple second flow characteristics is enabled, the second bit indicates whether the destination port in the multiple second flow characteristics is enabled, and the third bit indicates whether the source port in the multiple second flow characteristics is enabled;
Tunnel-level enabling flag (T Flag): occupies 1 bit, when the value is 1, it indicates that tunnel-level IFIT is required. In this case, the DIP Mask, SIP Mask, D-Flag, and L4-Flag are not effective; when the value is 0, it indicates that tunnel-level IFIT is not required.

The remaining fields included in value are reserved fields (Reserved).

Wherein, the structure of the extension flow monitor type identifier (Ext FM Flag) is shown in Figure 8, including an F flag and a reserved field.

F-Flag: occupies 1 bit, and is to indicate whether the enabling information of multiple second flow characteristics is identified, that is, to indicate whether the DIP Mask, SIP Mask, D-Flag and L4-Flag are effective.

In an example, the at least one sub-TLV further includes a second sub-TLV, which may also be referred to as an IFIT Capability sub-TLV. The second sub-TLV is to notify the tail node of the capabilities of the head node, so that the tail node can reasonably use these capabilities to identify the service packets subsequently sent by the head node, and can enable the tail node to encapsulate the service packet of the reverse service flow into a format that can be identified by the head node.

As shown in Figure 9, the second sub-TLV includes a Type field and a Length field, each of which occupies 8 bits. For example, the value of the Type field may be 1. The second TLV also includes a Value field.

The value field includes:
a first flag (M-Flag): occupies 1 bit, and is to indicate whether the head node supports alternating coloring IFIT, when the value is 1, it indicates support, and when the value is 0, it indicates non-support;
a second flag (E-Flag): occupies 1 bit, and is to indicate whether the head node supports enhanced alternating coloring IFIT, when the value is 1, it indicates support, and when the value is 0, it indicates non-support;
a third flag (F-Flag): occupies 1 bit, and is to indicate whether the head node supports dynamically establishing the service flow identification rule, when the value is 1, it indicates support, and when the value is 0, it indicates non-support;
reserved field (Reserved): occupies 21 bits;
encapsulation information (Encap): occupies 8 bits, and indicates the encapsulation position of the IFIT option supported by the head node.

The structure of the encapsulation information (Encap) is shown in Figure 10, and includes the following fields:
H-Flag: occupies 1 bit, and is to indicate whether the head node supports encapsulating the IFIT option (Option TLV) in a Hop-by-Hop Header, when the value is 1, it indicates support, and when the value is 0, it indicates non-support;
D-Flag: occupies 1 bit, and is to indicate whether the head node supports encapsulating the IFIT option in a Destination Header, when the value is 1, it indicates support, and when the value is 0, it indicates non-support.
S-Flag: occupies 1 bit, and is to indicate whether the head node supports encapsulating the IFIT option in the SRH, when the value is 1, it indicates support, and when the value is 0, it indicates non-support.

Furthermore, the tail node may determine an encapsulation position of the IFIT option of the service packet sent by the head node based on the values of the H-Flag, the D-Flag, and the S-Flag.

And the encapsulation information includes a reserved field (Reserved).

By carrying the second TLV in the first BGP update packet, the tail node can be informed of the encapsulation position of the IFIT option and the coloring method supported for the IFIT by the subsequent head node, which can reduce the workload of manual configuration and maintenance.

In some examples of the present disclosure, after the tail node generates a service flow identification rule based on the configuration information, if the tail node receives a second BGP update packet from the head node and the second BGP update packet does not include the configuration information, the service flow identification rule is deleted; or, if the tail node fails to receive a packet including multiple first flow characteristics for a preset duration, the service flow identification rule is deleted.

Wherein the format of the second BGP update packet is the same as that of the first BGP update packet, but in the second BGP update packet, contents of each field included in the first sub-TLV and the second sub-TLV are both empty.

After the tail node receives the second BGP update packet, if it identifies that contents of each field included in the first sub-TLV and the second sub-TLV in the second BGP update packet are empty, it can be determined that there is no need to continue IFIT based on the service flow identification rule, and the service flow identification rule can be deleted.

Alternatively, if the tail node fails to receive a forward service flow that matches the reverse service flow for a preset duration, it can be determined that there is no need to perform bidirectional detection on the transmission tunnel between the head node and the tail node, and the service flow identification rule can be deleted.

When any of the above conditions is met, the head node can automatically delete the service flow identification rule without manual configuration deletion, which can reduce the workload of manual configuration and achieve greater convenience.

Corresponding to the above method example, an example of the present disclosure further provides an IFIT information configuration method, which is applied to a head node, as shown in Figure 11, the method includes:
S1101, sending a first BGP update packet to a tail node, wherein the first BGP update packet includes IFIT configuration information.

Wherein after the head node is configured with IFIT information of a forward service flow and IFIT information of a reverse service flow, it can be determined that bidirectional IFIT is required, and then the first BGP update packet is sent to the tail node.

The specific structure of the first BGP update packet may refer to the relevant description in the above example, which will not be repeated here.

S1102, receiving a first service packet.

Wherein, the first service packet is an ordinary service packet. After the head node receives the first service packet, if it is determined that the first service packet matches the IFIT information of the forward service flow, that is, the first service packet is a service packet that requires IFIT, then the first IFIT option can be inserted into the first service packet to obtain a second service packet.

S1103, sending a second service packet to the tail node through a first path, wherein the second service packet includes a first IFIT option, the first IFIT option includes first indication information, and the first indication information is to indicate whether the tail node generates a service flow identification rule based on the configuration information.

Wherein the service flow identification rule is to identify the service flow that requires IFIT, the service flow is transmitted through a second path, which is a forwarding path from the tail node to the head node, and the first path and the second path pass through the same intermediate node.

The structure of the first IFIT option can refer to the relevant description in the above example, which will not be repeated here.

By adopting this method, the head node can send the first BGP update packet to the tail node, wherein the first BGP update packet includes the IFIT configuration information, then after receiving the first service packet, the head node sends a second service packet to the tail node through the first path, wherein the second service packet includes the first service packet and the first IFIT option, and the first IFIT option includes the first indication information. The first indication information is to indicate whether the tail node generates a service flow identification rule based on the configuration information, the service flow identification rule is to identify the service flow that requires IFIT, the service flow is transmitted through the second path, which is the forwarding path from the tail node to the head node, and the second path passes through the same intermediate node as the first path. It can be seen that in the above process, the head node can notify the IFIT configuration information to the tail node through the first BGP update packet, and then there is no need to carry the IFIT configuration information in each service packet of the forward service flow, which can avoid increasing the size of the service packet and improve the forwarding efficiency.

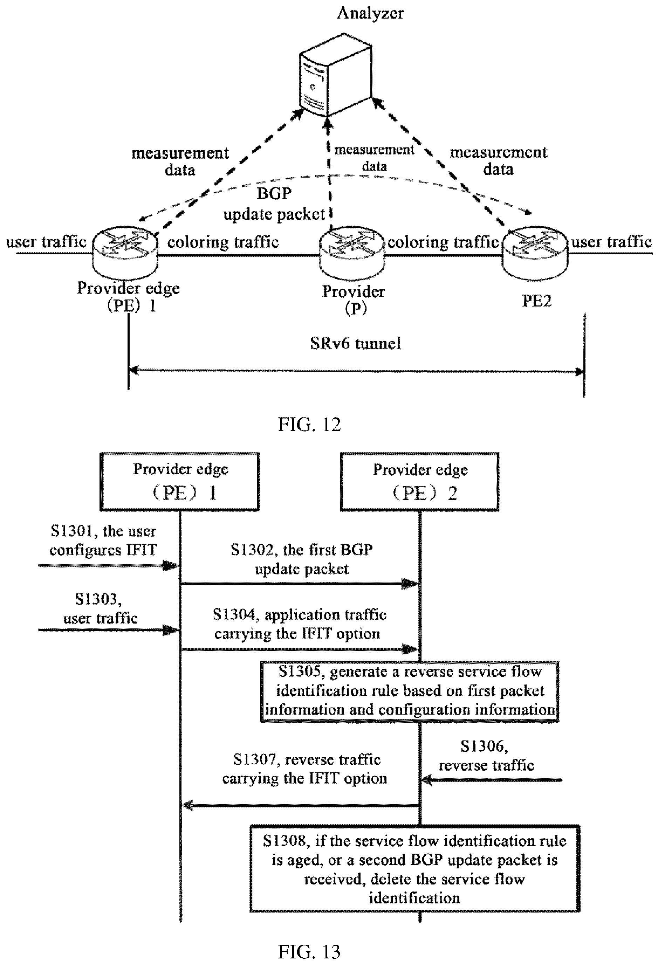

The following is an introduction to the IFIT information configuration method provided by the example of the present disclosure with reference to a specific example. Taking SRv6 (Segment Routing IPv6) networking as an example, as shown in Figure 12, there is an SRv6 tunnel between PE (Provider Edge) 1 and P (Provider), and there is also an SRv6 tunnel between P and PE2. An M-BGP peer has been established between PE1 and PE2, and an Overlay network has been connected between PE1 and PE2. PE1 is the head node, PE2 is the tail node, and P is the intermediate node. PE1 and PE2 can notify each other of routing information through the BGP update packet.

After PE1 receives the user traffic, if it is determined that the user traffic matches the IFIT information of the forward service flow, it encapsulates a packet of the user traffic with the first IFIT option to obtain the coloring traffic. Then PE1 transmits the coloring traffic to P, and P transmits the coloring traffic to PE2. After PE2 receives the coloring traffic, it restores the coloring traffic to user traffic and continues to transmit it to a destination device of the user traffic.

During this process, PE1, P and PE2 are required to report measurement data of the IFIT to the analyzer according to the coloring traffic.

In the networking structure of Figure 12, the interaction process between PE1 and PE2 is shown in Figure13, which specifically includes:
S1301, the user configures IFIT for PE1.

The information configured for PE1 includes IFIT information of a forward service flow and IFIT information of a reverse service flow.

S1302, PE1 sends the first BGP update packet to PE2.

Wherein, the first BGP update packet includes IFIT configuration information.

S1303, PE1 receives user traffic.

S1304, PE1 transmits application traffic carrying an IFIT option to PE2.

Wherein, if PE1 determines that the received user traffic matches the IFIT information of the forward service flow, it encapsulates the user traffic with an IFIT option. The IFIT option is the same as the first IFIT option in the above example, which will not be described again here.

It should be noted that PL1 forwards the application traffic carrying the IFIT option to P, and then P forwards it to PE2.

S 1305, PE2 generates a reverse service flow identification rule based on the first packet information and configuration information.

Wherein, the first packet information is the first data packet of the application traffic carrying the IFIT option.

The method for generating a service flow identification rule can refer to the relevant description in the above example, which will not be repeated here.

S1306, PE2 receives reverse traffic.

S1307, PE2 sends reverse application traffic carrying the IFIT option to PE1.

Wherein, if PE2 determines that the reverse traffic matches the service flow identification rule for the reverse service flow, it may encapsulate the reverse traffic with an IFIT option (a second IFIT option), and then forward it to PE1 via P.

S1308, if the service flow identification rule is aged, or PE2 receives a second BGP update packet, the service flow identification rule is deleted.

Wherein, if no service packet of the forward service flow is received for a preset duration, it can be determined that the service flow identification rule for the reverse service flow is aged, and then the service flow identification rule is deleted.

Alternatively, if PE1 can instruct the tail node to delete the service flow identification rule, that is, sends a second BGP update packet to PE2, after PE2 receives the second BGP update packet, if it is determined that the second BGP update packet does not include configuration information, the service flow identification rule is deleted.

By adopting this method, PE1 can notify PE2 of configuration information through the first BGP update packet, thus avoiding excessive service packet size and improving service packet forwarding efficiency. Moreover, PE2 can automatically generate a service flow identification rule without manual configuration, thus reducing the workload of manual configuration. Furthermore, when it is necessary to delete the service flow identification rule, manual configuration is not required, which can further reduce the workload of manual configuration.

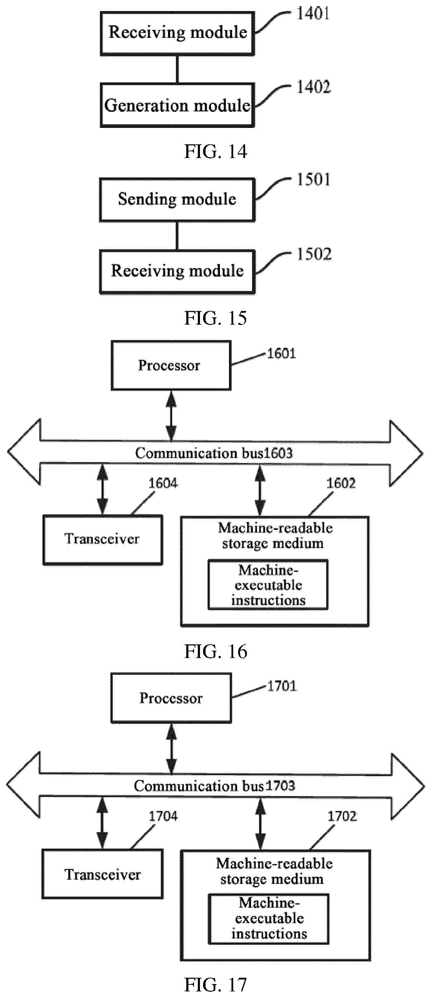

Corresponding to the above method example, an example of the present disclosure further provides an IFIT information configuration apparatus, which is applied to a tail node, as shown in Figure 14, the apparatus includes:
a receiving module 1401, to receive a first BGP update packet from a head node, wherein the first BGP update packet includes IFIT configuration information; and to receive a first service packet from the head node through a first path, wherein the first service packet includes a first IFIT option, and the first IFIT option includes first indication information;
a generation module 1402, if a value of the first indication information is a first value, to generate a service flow identification rule based on the configuration information, wherein the service flow identification rule is to identify a service flow requiring IFIT, and the service flow is transmitted through a second path, the second path is a forwarding path from the tail node to the head node, and the first path and the second path pass through a same intermediate node.

In an example, the configuration information includes a tunnel-level enabling flag;
the generation module 1402 is specifically to generate, if a value of the tunnel-level enabling flag is a first value, a first-type service flow identification rule that includes a segment list identifier, a path indicated by the segment list identifier is the second path, and the second path constitutes a transmission tunnel.

In an example, the first service packet includes an original packet, the original packet includes multiple first flow characteristics; the configuration information further includes enabling information of multiple second flow characteristics;
the generating module 1402 is specifically to:
obtain, if a value of the tunnel enabling flag is a second value, a value of each second flow characteristic from the multiple first flow characteristics based on each enabled second flow characteristic indicated by the enabling information;
generate a second-type service flow identification rule based on values of the second flow characteristics.

In an example, the first BGP update packet includes an SR Policy SAFI NLRI field, the SR Policy SAFI NLRI field includes Tunnel Encaps Attribute including IFIT Attributes TLV;
the IFIT Attributes TLV includes at least one sub-TLV that is to carry the configuration information.

In an example, the at least one sub-TLV includes a first sub-TLV, a value field of the first sub-TLV includes a service flow identifier, a device node identifier, an extension flow monitor type identifier, enabling information of the multiple second flow characteristics, and a tunnel-level enabling flag; the multiple second flow characteristics include a destination IP address, a source IP address, a DSCP, a protocol name, a destination port, and a source port; the enabling information of the multiple second flow characteristics includes a destination IP address mask, a source IP address mask, a D-Flag, and an L4-Flag;
the extension flow monitor type identifier comprises an F-Flag, and the F-Flag is to indicate whether to identify the enabling information of the multiple second flow characteristics;
the destination IP address mask is to indicate whether each bit comprised in the destination IP address is enabled;
the source IP address mask is to indicate whether each bit comprised in the source IP address is enabled;
the D-Flag is to indicate whether the DSCP is enabled;
the L4-Flag includes 3 bits, the first bit is to indicate whether the protocol name is enabled, the second bit is to indicate whether the destination port is enabled, and the third bit is to indicate whether the source port is enabled.

In an example, the at least one sub-TLV further includes a second sub-TLV, and a value field of the second sub-TLV includes a first flag, a second flag, a third flag and encapsulation information;
the first flag is to indicate whether the head node supports alternating coloring IFIT, the second flag is to indicate whether the head node supports enhanced alternating coloring IFIT, and the third flag is to indicate whether the head node supports dynamically establishing the service flow identification rule;
the encapsulation information includes an H-Flag, a D-Flag, and an S-Flag, wherein the H-Flag is to indicate whether the head node supports encapsulating an IFIT option in a hop-by-hop header, the D-Flag is to indicate whether the head node supports encapsulating an IFIT option in a destination header, and the S-Flag is to indicate whether the head node supports encapsulating an IFIT option in an SRH.

In an example, the apparatus further includes:
a storage module, to store the service flow identification rule in a forwarding plane;
an encapsulation module, to encapsulate, when receiving a second service packet that complies with the service flow identification rule, the second service packet with a second IFIT option to obtain a third service packet;
a transmission module, to transmit the third service packet to the head node through the second path.

In an example, the apparatus further includes:
a deleting module, to delete the service flow identification rule if a second BGP update packet is received from the head node and the second BGP update packet does not comprise the configuration information; or to delete the service flow identification rule if no packet comprising the multiple first flow characteristics is received for a preset duration.

Corresponding to the above method example, an example of the present disclosure further provides an IFIT information configuration apparatus, which is applied to a head node, as shown in Figure 15, the apparatus includes:
a sending module 1501, to send a first BGP update packet to a tail node, wherein the first BGP update packet includes IFIT configuration information;
a receiving module 1502, to receive a first service packet;
the sending module 1501 is further to send a second service packet to the tail node through a first path, wherein the second service packet includes a first IFIT option, the first IFIT option includes first indication information, the first indication information is to indicate whether the tail node generates a service flow identification rule based on the configuration information, the service flow identification rule is to identify a service flow requiring IFIT, the service flow is transmitted through a second path, the second path is a forwarding path from the tail node to the head node, and the first path and the second path pass through a same intermediate node.

In an example, the first BGP update packet includes an SR Policy SAFI NLRI field, the SR Policy SAFI NLRI field includes Tunnel Encaps Attribute including IFIT Attributes TLV;
the IFIT Attributes TLV includes at least one sub-TLV that is to carry the configuration information.

In an example, the at least one sub-TLV includes a first sub-TLV, a value field of the first sub-TLV includes a service flow identifier, a device node identifier, an extension flow monitor type identifier, enabling information of the multiple second flow characteristics, and a tunnel-level enabling flag; the multiple second flow characteristics include a destination IP address, a source IP address, a DSCP, a protocol name, a destination port, and a source port; the enabling information of the multiple second flow characteristics includes a destination IP address mask, a source IP address mask, a D-Flag, and an L4-Flag;
the extension flow monitor type identifier comprises an F-Flag, and the F-Flag is to indicate whether to identify the enabling information of the multiple second flow characteristics;
the destination IP address Mask is to indicate whether each bit comprised in the destination IP address is enabled;
the source IP address Mask is to indicate whether each bit comprised in the source IP address is enabled;
the D-Flag is to indicate whether the DSCP is enabled;
the L4-Flag includes 3 bits, the first bit is to indicate whether the protocol name is enabled, the second bit is to indicate whether the destination port is enabled, and the third bit is to indicate whether the source port is enabled.

In an example, the at least one sub-TLV further includes a second sub-TLV, and a value field of the second sub-TLV includes a first flag, a second flag, a third flag and encapsulation information;
the first flag is to indicate whether the head node supports alternating coloring IFIT, the second flag is to indicate whether the head node supports enhanced alternating coloring IFIT, and the third flag is to indicate whether the head node supports dynamically establishing the service flow identification rule;
the encapsulation information includes an H-Flag, a D-Flag, and an S-Flag, wherein the H-Flag is to indicate whether the head node supports encapsulating an IFIT option in a hop-by-hop header, the D-Flag is to indicate whether the head node supports encapsulating an IFIT option in a destination header, and the S-Flag is to indicate whether the head node supports encapsulating an IFIT option in an SRH.

In an example, the sending module 1501 is further to send a second BGP update packet to the tail node, wherein the second BGP update packet does not include the configuration information and is to instruct the tail node to delete the service flow identification rule.

Corresponding to the above method example, an example of the present disclosure further provides a network device, which is applied to a tail node, as shown in Figure 16, the network device includes: a processor 1601; a transceiver 1604; a machine-readable storage medium 1602, which stores machine-executable instructions that can be executed by the processor 1601; the machine-executable instructions cause the processor 1601 to: receive a first BGP update packet from a head node, wherein the first BGP update packet includes reverse IFIT configuration information;
receive a first service packet from the head node through a first path, wherein the first service packet includes a first IFIT option, and the first IFIT option includes first indication information;
if a value of the first indication information is a first value, generate a service flow identification rule based on the configuration information, wherein the service flow identification rule is to identify a service flow requiring IFIT, and the service flow is transmitted through a second path, the second path is a forwarding path from the tail node to the head node, and the first path and the second path pass through the same intermediate node.

In an example, the configuration information includes a tunnel-level enabling flag;
the machine executable instructions further cause the processor 1601 to: generate, if a value of the tunnel-level enabling flag is the first value, a first-type service flow identification rule that includes a segment list identifier, a path indicated by the segment list identifier is the second path, and the second path constitutes a transmission tunnel.

In an example, the first service packet includes an original packet, the original packet includes multiple first flow characteristics; the configuration information further includes enabling information of multiple second flow characteristics;
the machine executable instructions further cause the processor 1601 to:
obtain, if a value of the tunnel enabling flag is a second value, a value of each second flow characteristic from the multiple first flow characteristics based on each enabled second flow characteristic indicated by the enabling information;
generate a second-type service flow identification rule based on values of the second flow characteristics.

In an example, the first BGP update packet includes an SR Policy SAFI NLRI field, the SR Policy SAFI NLRI field includes Tunnel Encaps Attribute including IFIT Attributes TLV;
the IFIT Attributes TLV includes at least one sub-TLV that is to carry the configuration information.

In an example, the at least one sub-TLV includes a first sub-TLV, a value field of the first sub-TLV includes a service flow identifier, a device node identifier, an extension flow monitor type identifier, enabling information of the multiple second flow characteristics, and a tunnel-level enabling flag; the multiple second flow characteristics include a destination IP address, a source IP address, a DSCP, a protocol name, a destination port, and a source port; the enabling information of the multiple second flow characteristics includes a destination IP address mask, a source IP address mask, a D-Flag, and an L4-Flag;
the extension flow monitor type identifier comprises an F-Flag, and the F-Flag is to indicate whether to identify the enabling information of the multiple second flow characteristics;
the destination IP address mask is to indicate whether each bit comprised in the destination IP address is enabled;
the source IP address mask is to indicate whether each bit comprised in the source IP address is enabled;
the D-Flag is to indicate whether the DSCP is enabled;
the L4-Flag includes 3 bits, the first bit is to indicate whether the protocol name is enabled, the second bit is to indicate whether the destination port is enabled, and the third bit is to indicate whether the source port is enabled.

In an example, the at least one sub-TLV further includes a second sub-TLV, and a value field of the second sub-TLV includes a first flag, a second flag, a third flag and encapsulation information;
the first flag is to indicate whether the head node supports alternating coloring IFIT, the second flag is to indicate whether the head node supports enhanced alternating coloring IFIT, and the third flag is to indicate whether the head node supports dynamically establishing the service flow identification rule;
the encapsulation information includes an H-Flag, a D-Flag, and an S-Flag, wherein the H-Flag is to indicate whether the head node supports encapsulating an IFIT option in a hop-by-hop header, the D-Flag is to indicate whether the head node supports encapsulating an IFIT option in a destination header, and the S-Flag is to indicate whether the head node supports encapsulating an IFIT option in an SRH.

In an example, the machine executable instructions further cause the processor 1601 to:
store the service flow identification rule in a forwarding plane;
when receiving a second service packet that complies with the service flow identification rule, encapsulate the second service packet with a second IFIT option to obtain a third service packet;
transmit the third service packet to the head node through the second path.

In an example, the machine executable instructions further cause the processor 1601 to:
delete the service flow identification rule if a second BGP update packet is received from the head node, and the second BGP update packet does not include the configuration information; or,
delete the service flow identification rule if no packet including the multiple first flow characteristics is received for a preset duration.

As shown in Figure 16, the network device may further include a communication bus 1603. The processor 1601, the machine-readable storage medium 1602, and the transceiver 1604 communicate with each other through the communication bus 1603. The communication bus 1603 may be a Peripheral Component Interconnect (PCI) bus or an Extended Industry Standard Architecture (EISA) bus. The communication bus 1603 may be divided into an address bus, a data bus, a control bus, and the like.

The transceiver 1604 may be a wireless communication module. Under the control of the processor 1601, the transceiver 1604 interacts with other devices for data exchange.

The machine-readable storage medium 1602 may include a random access memory (RAM) or a non-volatile memory (NVM), such as at least one disk memory. In addition, the machine-readable storage medium 1602 may also be at least one storage device located away from the aforementioned processor.

The processor 1601 may be a general-purpose processor, including a central processing unit (CPU), a network processor (NP), etc.; it may also be a digital signal processor (DSP), an application specific integrated circuit (ASIC), a field programmable gate array (FPGA) or other programmable logic devices, discrete gate or transistor logic devices, and discrete hardware components.

Corresponding to the above method example, the example of the present disclosure further provides a network device, which is applied to a head node, the network device includes: a processor 1701; a transceiver 1704; a machine-readable storage medium 1702, which stores machine-executable instructions that can be executed by the processor 1701; the machine-executable instructions cause the processor 1701 to: send a first BGP update packet to a tail node, wherein the first BGP update packet includes reverse IFIT configuration information;
receive a first service packet;
send a second service packet to the tail node through a first path, wherein the second service packet includes a first IFIT option, the first IFIT option includes first indication information, the first indication information is to indicate whether the tail node generates a service flow identification rule based on the configuration information, the service flow identification rule is to identify a service flow requiring IFIT, the service flow is transmitted through a second path, the second path is a forwarding path from the tail node to the head node, and the first path and the second path pass through the same intermediate node.

In an example, the first BGP update packet includes an SR Policy SAFI NLRI field, the SR Policy SAFI NLRI field includes Tunnel Encaps Attribute including IFIT Attributes TLV;
the IFIT Attributes TLV includes at least one sub-TLV that is to carry the configuration information.

In an example, the at least one sub-TLV includes a first sub-TLV, a value field of the first sub-TLV includes a service flow identifier, a device node identifier, an extension flow monitor type identifier, enabling information of the multiple second flow characteristics, and a tunnel-level enabling flag; the multiple second flow characteristics include a destination IP address, a source IP address, a DSCP, a protocol name, a destination port, and a source port; the enabling information of the multiple second flow characteristics includes a destination IP address mask, a source IP address mask, a D-Flag, and an L4-Flag;
the extension flow monitor type identifier comprises an F-Flag, and the F-Flag is to indicate whether to identify the enabling information of the multiple second flow characteristics;
the destination IP address mask is to indicate whether each bit comprised in the destination IP address is enabled;
the source IP address mask is to indicate whether each bit comprised in the source IP address is enabled;
the D-Flag is to indicate whether the DSCP is enabled;
the L4-Flag includes 3 bits, the first bit is to indicate whether the protocol name is enabled, the second bit is to indicate whether the destination port is enabled, and the third bit is to indicate whether the source port is enabled.

In an example, the at least one sub-TLV further includes a second sub-TLV, and a value field of the second sub-TLV includes a first flag, a second flag, a third flag and encapsulation information;
the first flag is to indicate whether the head node supports alternating coloring IFIT, the second flag is to indicate whether the head node supports enhanced alternating coloring IFIT, and the third flag is to indicate whether the head node supports dynamically establishing the service flow identification rule;
the encapsulation information includes an H-Flag, a D-Flag, and an S-Flag, wherein the H-Flag is to indicate whether the head node supports encapsulating an IFIT option in a hop-by-hop header, the D-Flag is to indicate whether the head node supports encapsulating an IFIT option in a destination header, and the S-Flag is to indicate whether the head node supports encapsulating an IFIT option in SRH.

In an example, the machine executable instructions further cause the processor 1701 to:
send a second BGP update packet to the tail node, wherein the second BGP update packet does not include the configuration information and is to instruct the tail node to delete the service flow identification rule.

As shown in Figure 17, the network device may further include a communication bus 1703. The processor 1701, the machine-readable storage medium 1702, and the transceiver 1704 communicate with each other through the communication bus 1703. The communication bus 1703 may be a Peripheral Component Interconnect (PCI) bus or an Extended Industry Standard Architecture (EISA) bus. The communication bus 1703 may be divided into an address bus, a data bus, a control bus, and the like.

The transceiver 1704 may be a wireless communication module, and under the control of the processor 1701, the transceiver 1704 interacts with other devices for data exchange.

The machine-readable storage medium 1702 may include a random access memory (RAM) or a non-volatile memory (NVM), such as at least one disk memory. In addition, the machine-readable storage medium 1702 may also be at least one storage device located away from the aforementioned processor.

The processor 1701 may be a general-purpose processor, including a central processing unit (CPU), a network processor (NP), etc.; it may also be a digital signal processor (DSP), an application specific integrated circuit (ASIC), a field programmable gate array (FPGA) or other programmable logic devices, discrete gate or transistor logic devices, discrete hardware components.

Based on the same invention concept, according to the methods provided by the above examples of the present disclosure, an example of the present disclosure further provides a machine-readable storage medium, which stores machine-executable instructions that can be executed by a processor, when executed, the machine-executable instructions cause the processor to implement any of the above-mentioned IFIT information configuration methods.

In yet another example provided by the present disclosure, a computer program product containing instructions is further provided, which, when running on a computer, cause the computer to carry out any of the IFIT information configuration methods in the above examples.

It should be noted that, here such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or device. Without further limitation, elements defined by the phrase "including one..." do not preclude the presence of additional identical elements in a process, method, article or device that includes the mentioned elements.

The above descriptions are only preferred examples of the present disclosure, and are not intended to limit the present disclosure. Any modifications, equivalent replacements, improvements and the like made within the spirit and principles of the present disclosure shall be included within the scope of protection of the present disclosure.

## Claims

1. An IFIT information configuration method, wherein the method is applied to a tail node and comprises:
receiving a first BGP update packet from a head node, wherein the first BGP update packet comprises IFIT configuration information;
receiving a first service packet from the head node through a first path, wherein the first service packet comprises a first IFIT option, and the first IFIT option comprises first indication information;
if a value of the first indication information is a first value, generating a service flow identification rule based on the configuration information, wherein the service flow identification rule is to identify a service flow requiring IFIT, and the service flow is transmitted through a second path, the second path is a forwarding path from the tail node to the head node, and the first path and the second path pass through a same intermediate node.

2. The method according to claim 1, wherein the configuration information comprises a tunnel-level enabling flag;
wherein generating a service flow identification rule based on the configuration information comprises:
if a value of the tunnel-level enabling flag is a first value, generating a first-type service flow identification rule that comprises a segment list identifier, wherein a path indicated by the segment list identifier is the second path, and the second path constitutes a transmission tunnel.

3. The method according to claim 2, wherein the first service packet comprises an original packet, the original packet comprises multiple first flow characteristics; the configuration information further comprises enabling information for multiple second flow characteristics;
wherein generating a service flow identification rule based on the configuration information comprises:
if a value of the tunnel-level enabling flag is a second value, obtaining a value of each second flow characteristic from the multiple first flow characteristics based on each enabled second flow characteristic indicated by the enabling information;
generating a second-type service flow identification rule based on values of the second flow characteristics.

4. The method according to any one of claims 1 to 3, wherein the first BGP update packet comprises an SR Policy SAFI NLRI field, the SR Policy SAFI NLRI field comprises Tunnel Encaps Attribute comprising IFIT Attributes TLV;
the IFIT Attributes TLV comprise at least one sub-TLV that is to carry the configuration information.

5. The method according to claim 4, wherein the at least one sub-TLV comprises a first sub-TLV, a value field of the first sub-TLV comprises a service flow identifier, a device node identifier, an extension flow monitor type identifier, enabling information of the multiple second flow characteristics, and a tunnel-level enabling flag; the multiple second flow characteristics comprise a destination IP address, a source IP address, a DSCP, a protocol name, a destination port, and a source port; the enabling information of the multiple second flow characteristics comprises a destination IP address mask, a source IP address mask, a D-Flag, and an L4-Flag;
the extension flow monitor type identifier comprises an F-Flag, and the F-Flag is to indicate whether to identify the enabling information of the multiple second flow characteristics;
the destination IP address mask is to indicate whether each bit comprised in the destination IP address is enabled;
the source IP address mask is to indicate whether each bit comprised in the source IP address is enabled;
the D-Flag is to indicate whether the DSCP is enabled;
the L4-Flag comprises 3 bits, a first bit is to indicate whether the protocol name is enabled, a second bit is to indicate whether the destination port is enabled, and a third bit is to indicate whether the source port is enabled.

6. The method according to claim 5, wherein the at least one sub-TLV further comprises a second sub-TLV, and a value field of the second sub-TLV comprises a first flag, a second flag, a third flag and encapsulation information;
the first flag is to indicate whether the head node supports alternating coloring IFIT, the second flag is to indicate whether the head node supports enhanced alternating coloring IFIT, and the third flag is to indicate whether the head node supports dynamically establishing the service flow identification rule;
the encapsulation information comprises an H-Flag, a D-Flag, and an S-Flag, wherein the H-Flag is to indicate whether the head node supports encapsulating an IFIT option in a hop-by-hop header, the D-Flag is to indicate whether the head node supports encapsulating an IFIT option in a destination header, and the S-Flag is to indicate whether the head node supports encapsulating an IFIT option in an SRH.

7. The method according to claim 1, wherein after generating a service flow identification rule based on the configuration information, the method further comprises:
storing the service flow identification rule in a forwarding plane;
when receiving a second service packet that complies with the service flow identification rule, encapsulating the second service packet with a second IFIT option to obtain a third service packet;
transmitting the third service packet to the head node through the second path.

8. The method according to claim 3, wherein after generating a service flow identification rule based on the configuration information, the method further comprises:
if a second BGP update packet is received from the head node, and the second BGP update packet does not comprise the configuration information, deleting the service flow identification rule; or,
if no packet comprising the multiple first flow characteristics is received for a preset duration, deleting the service flow identification rule.

9. An IFIT information configuration method, wherein the method is applied to a head node and comprises:
sending a first BGP update packet to a tail node, wherein the first BGP update packet comprises IFIT configuration information;
receiving a first service packet;
sending a second service packet to the tail node through a first path, wherein the second service packet comprises a first IFIT option, the first IFIT option comprises first indication information, the first indication information is to indicate whether the tail node generates a service flow identification rule based on the configuration information, the service flow identification rule is to identify a service flow requiring IFIT, the service flow is transmitted through a second path, the second path is a forwarding path from the tail node to the head node, and the first path and the second path pass through a same intermediate node.

10. The method according to claim 9, wherein the first BGP update packet comprises an SR Policy SAFI NLRI field, the SR Policy SAFI NLRI field comprises Tunnel Encaps Attribute comprising IFIT Attributes TLV;
the IFIT Attributes TLV comprise at least one sub-TLV that is to carry the configuration information.

11. The method according to claim 10, wherein the at least one sub-TLV comprises a first sub-TLV, a value field of the first sub-TLV comprises a service flow identifier, a device node identifier, an extension flow monitor type identifier, enabling information of the multiple second flow characteristics, and a tunnel-level enabling flag; the multiple second flow characteristics comprise a destination IP address, a source IP address, a DSCP, a protocol name, a destination port, and a source port; the enabling information of the multiple second flow characteristics comprises a destination IP address mask, a source IP address mask, a D-Flag, and an L4-Flag;
the extension flow monitor type flag comprises an F-Flag, and the F-Flag is to indicate whether to identify the enabling information of the multiple second flow characteristics;
the destination IP address Mask is to indicate whether each bit comprised in the destination IP address is enabled;
the source IP address Mask is to indicate whether each bit comprised in the source IP address is enabled;
the D-Flag is to indicate whether the DSCP is enabled;
the L4-Flag comprises 3 bits, a first bit is to indicate whether the protocol name is enabled, a second bit is to indicate whether the destination port is enabled, and a third bit is to indicate whether the source port is enabled.

12. The method according to claim 11, wherein the at least one sub-TLV further comprises a second sub-TLV, and a value field of the second sub-TLV comprises a first flag, a second flag, a third flag and encapsulation information;
the first flag is to indicate whether the head node supports alternating coloring IFIT, the second flag is to indicate whether the head node supports enhanced alternating coloring IFIT, and the third flag is to indicate whether the head node supports dynamically establishing the service flow identification rule;
the encapsulation information comprises an H-Flag, a D-Flag, and an S-Flag, wherein the H-Flag is to indicate whether the head node supports encapsulating an IFIT option in a hop-by-hop header, the D-Flag is to indicate whether the head node supports encapsulating an IFIT option in a destination header, and the S-Flag is to indicate whether the head node supports encapsulating an IFIT option in an SRH.

13. The method according to any one of claims 9 to 12, wherein after sending a second service packet to the tail node through a first path, the method further comprises:
sending a second BGP update packet to the tail node, wherein the second BGP update packet does not comprise the configuration information and is to instruct the tail node to delete the service flow identification rule.

14. An IFIT information configuration apparatus, wherein the apparatus is applied to a tail node and comprises:
a receiving module, to receive a first BGP update packet from a head node, wherein the first BGP update packet comprises IFIT configuration information; and to receive a first service packet from the head node through a first path, wherein the first service packet comprises a first IFIT option, and the first IFIT option comprises first indication information;
a generation module, to generate, if a value of the first indication information is a first value, a service flow identification rule based on the configuration information, wherein the service flow identification rule is to identify a service flow requiring IFIT, and the service flow is transmitted through a second path, the second path is a forwarding path from the tail node to the head node, and the first path and the second path pass through a same intermediate node.

15. The apparatus according to claim 14, wherein the configuration information comprises a tunnel-level enabling flag;
wherein the generation module is specifically to generate, if a value of the tunnel-level enabling flag is a first value, a first-type service flow identification rule that comprises a segment list identifier, wherein a path indicated by the segment list identifier is the second path, and the second path constitutes a transmission tunnel.

16. The apparatus according to claim 15, wherein the first service packet comprises an original packet, the original packet comprises multiple first flow characteristics; the configuration information further comprises enabling information of multiple second flow characteristics;
wherein the generation module is specifically to:
obtain, if a value of the tunnel enabling flag is a second value, a value of each second flow characteristic from the multiple first flow characteristics based on each enabled second flow characteristic indicated by the enabling information;
generate a second-type service flow identification rule based on values of the second flow characteristics.

17. The apparatus according to any one of claims 14 to 16, wherein the first BGP update packet comprises an SR Policy SAFI NLRI field, the SR Policy SAFI NLRI field comprises Tunnel Encaps Attribute comprising IFIT Attributes TLV;
the IFIT Attributes TLV comprises at least one sub-TLV that is to carry the configuration information.

18. The apparatus according to claim 17, wherein the at least one sub-TLV comprises a first sub-TLV, a value field of the first sub-TLV comprises a service flow identifier, a device node identifier, an extension flow monitor type flag, enabling information of the multiple second flow characteristics, and a tunnel-level enabling flag; the multiple second flow characteristics comprise a destination **IP** address, a source **IP** address, a DSCP, a protocol name, a destination port, and a source port; the enabling information of the multiple second flow characteristics comprises a destination **IP** address mask, a source **IP** address mask, a D-Flag, and an L4-Flag;
the extension flow monitor type identifier comprises an F-Flag, and the F-Flag is to indicate whether to identify the enabling information of the multiple second flow characteristics;
the destination **IP** address mask is to indicate whether each bit comprised in the destination **IP** address is enabled;
the source **IP** address mask is to indicate whether each bit comprised in the source **IP** address is enabled;
the D-Flag is to indicate whether the DSCP is enabled;
the L4-Flag comprises 3 bits, a first bit is to indicate whether the protocol name is enabled, a second bit is to indicate whether the destination port is enabled, and a third bit is to indicate whether the source port is enabled.

19. The apparatus according to claim 18, wherein the at least one sub-TLV further comprises a second sub-TLV, and a value field of the second sub-TLV comprises a first flag, a second flag, a third flag and encapsulation information;
the first flag is to indicate whether the head node supports alternating coloring IFIT, the second flag is to indicate whether the head node supports enhanced alternating coloring IFIT, and the third flag is to indicate whether the head node supports dynamically establishing the service flow identification rule;
the encapsulation information comprises an H-Flag, a D-Flag, and an S-Flag, wherein the H-Flag is to indicate whether the head node supports encapsulating an IFIT option in a hop-by-hop header, the D-Flag is to indicate whether the head node supports encapsulating an IFIT option in a destination header, and the S-Flag is to indicate whether the head node supports encapsulating an IFIT option in an SRH.

20. The apparatus according to claim 14, further comprising:
a storage module, to store the service flow identification rule in a forwarding plane;
an encapsulation module, to encapsulate, when receiving a second service packet that complies with the service flow identification rule, the second service packet with a second IFIT option to obtain a third service packet;
a transmission module, to transmit the third service packet to the head node through the second path.

21. The apparatus according to claim 16, further comprising:
a deleting module, to delete the service flow identification rule if a second BGP update packet is received from the head node and the second BGP update packet does not comprise the configuration information; or to delete the service flow identification rule if no packet comprising the multiple first flow characteristics is received for a preset duration.

22. An IFIT information configuration apparatus, wherein the apparatus is applied to a head node and comprises:
a sending module, to send a first BGP update packet to a tail node, wherein the first BGP update packet comprises IFIT configuration information;
a receiving module, to receive a first service packet;
wherein the sending module is further to send a second service packet to the tail node through a first path, wherein the second service packet comprises a first IFIT option, the first IFIT option comprises first indication information, the first indication information is to indicate whether the tail node generates a service flow identification rule based on the configuration information, the service flow identification rule is to identify a service flow requiring IFIT, the service flow is transmitted through a second path, the second path is a forwarding path from the tail node to the head node, and the first path and the second path pass through a same intermediate node.

23. The apparatus according to claim 22, wherein the first BGP update packet comprises an SR Policy SAFI NLRI field, the SR Policy SAFI NLRI field comprises Tunnel Encaps Attribute comprising IFIT Attributes TLV;
the IFIT Attributes TLV comprise at least one sub-TLV that is to carry the configuration information.

24. The apparatus according to claim 23, wherein the at least one sub-TLV comprises a first sub-TLV, a value field of the first sub-TLV comprises a service flow identifier, a device node identifier, an extension flow monitor type identifier, enabling information of the multiple second flow characteristics, and a tunnel-level enabling flag; the multiple second flow characteristics comprise a destination IP address, a source IP address, a DSCP, a protocol name, a destination port, and a source port; the enabling information of the multiple second flow characteristics comprises a destination IP address mask, a source IP address mask, a D-Flag, and an L4-Flag;
the extension flow monitor type identifier comprises an F-Flag, and the F-Flag is to indicate whether to identify the enabling information of the multiple second flow characteristics;
the destination IP address mask is to indicate whether each bit comprised in the destination IP address is enabled;
the source IP address mask is to indicate whether each bit comprised in the source IP address is enabled;
the D-Flag is to indicate whether the DSCP is enabled;
the L4-Flag comprises 3 bits, a first bit is to indicate whether the protocol name is enabled, a second bit is to indicate whether the destination port is enabled, and a third bit is to indicate whether the source port is enabled.

25. The apparatus according to claim 24, wherein the at least one sub-TLV further comprises a second sub-TLV, and a value field of the second sub-TLV comprises a first flag, a second flag, a third flag and encapsulation information;
the first flag is to indicate whether the head node supports alternating coloring IFIT, the second flag is to indicate whether the head node supports enhanced alternating coloring IFIT, and the third flag is to indicate whether the head node supports dynamically establishing the service flow identification rule;
the encapsulation information comprises an H-Flag, a D-Flag, and an S-Flag, wherein the H-Flag is to indicate whether the head node supports encapsulating an IFIT option in a hop-by-hop header, the D-Flag is to indicate whether the head node supports encapsulating an IFIT option in a destination header, and the S-Flag is to indicate whether the head node supports encapsulating an IFIT option in an SRH.

26. The apparatus according to any one of claims 22-25, wherein the sending module is further to send a second BGP update packet to the tail node, wherein the second BGP update packet does not comprise the configuration information and is to instruct the tail node to delete the service flow identification rule.

27. A network device, wherein the network device is applied to a tail node and comprises:
a processor;
a transceiver;
a machine-readable storage medium storing machine-executable instructions that can be executed by the processor; when executed, the machine-executable instructions cause the processor to:
receive a first BGP update packet from a head node, wherein the first BGP update packet comprises reverse IFIT configuration information;
receive a first service packet from the head node through a first path, wherein the first service packet comprises a first IFIT option, and the first IFIT option comprises first indication information;
if a value of the first indication information is a first value, generate a service flow identification rule based on the configuration information, wherein the service flow identification rule is to identify a service flow requiring IFIT, and the service flow is transmitted through a second path, the second path is a forwarding path from the tail node to the head node, and the first path and the second path pass through a same intermediate node.

28. The network device according to claim 27, wherein the configuration information comprises a tunnel-level enabling flag, wherein the tunnel-level enabling flag is to indicate whether to perform reverse IFIT based on a tunnel;
the machine executable instructions further cause the processor to:
if a value of the tunnel-level enabling flag is a first value, generate a first-type service flow identification rule that comprises a segment list identifier, wherein a path indicated by the segment list identifier is the second path, and the second path constitutes a transmission tunnel.

29. The network device according to claim 28, wherein the first service packet comprises an original packet, the original packet comprises multiple first flow characteristics; the configuration information further comprises enabling information for multiple second flow characteristics;
the machine executable instructions further cause the processor to:
obtain, if a value of the tunnel enabling flag is a second value, a value of each second flow characteristic from the multiple first flow characteristics based on each enabled second flow characteristic indicated by the enabling information;
generate a second-type service flow identification rule based on values of the second flow characteristics.

30. The network device according to any one of claims 27 to 29, wherein the first BGP update packet comprises an SR Policy SAFI NLRI field, the SR Policy SAFI NLRI field comprises Tunnel Encaps Attribute comprising IFIT Attributes TLV;
the IFIT Attributes TLV comprises at least one sub-TLV that is to carry the configuration information.

31. The network device according to claim 30, wherein the at least one sub-TLV comprises a first sub-TLV, a value field of the first sub-TLV comprises a service flow identifier, a device node identifier, an extension flow monitor type identifier, enabling information of the multiple second flow characteristics, and a tunnel-level enabling flag; the multiple second flow characteristics comprise a destination IP address, a source IP address, a DSCP, a protocol name, a destination port, and a source port; the enabling information of the multiple second flow characteristics comprises a destination IP address mask, a source IP address mask, a D-Flag, and an L4-Flag;
the extension flow monitor type identifier comprises an F-Flag, and the F-Flag is to indicate whether to identify the enabling information of the multiple second flow characteristics;
the destination IP address mask is to indicate whether each bit comprised in the destination IP address is enabled;
the source IP address mask is to indicate whether each bit comprised in the source IP address is enabled;
the D-Flag is to indicate whether the DSCP is enabled;
the L4-Flag comprises 3 bits, a first bit is to indicate whether the protocol name is enabled, a second bit is to indicate whether the destination port is enabled, and a third bit is to indicate whether the source port is enabled.

32. The network device according to claim 31, wherein the at least one sub-TLV further comprises a second sub-TLV, and a value field of the second sub-TLV comprises a first flag, a second flag, a third flag and encapsulation information;
the first flag is to indicate whether the head node supports alternating coloring IFIT, the second flag is to indicate whether the head node supports enhanced alternating coloring IFIT, and the third flag is to indicate whether the head node supports dynamically establishing the service flow identification rule;
the encapsulation information comprises an H-Flag, a D-Flag, and an S-Flag, wherein the H-Flag is to indicate whether the head node supports encapsulating an IFIT option in a hop-by-hop header, the D-Flag is to indicate whether the head node supports encapsulating an IFIT option in a destination header, and the S-Flag is to indicate whether the head node supports encapsulating an IFIT option in an SRH.

33. The network device according to claim 27, wherein the machine executable instructions further cause the processor to:
store the service flow identification rule in a forwarding plane;
when receiving a second service packet that complies with the service flow identification rule, encapsulate the second service packet with a second IFIT option to obtain a third service packet;
transmit the third service packet to the head node through the second path.

34. The network device according to claim 29, wherein the machine executable instructions further cause the processor to:
if a second BGP update packet is received from the head node, and the second BGP update packet does not comprise the configuration information, delete the service flow identification rule; or,
if no packet comprising the multiple first flow characteristics is received for a preset duration, delete the service flow identification rule.

35. A network device, wherein the network device is applied to a head node and comprises:
a processor;
a transceiver;
a machine-readable storage medium storing machine-executable instructions that can be executed by the processor; when executed, the machine-executable instructions cause the processor to:
send a first BGP update packet to a tail node, wherein the first BGP update packet comprises reverse IFIT configuration information;
receive a first service packet;
send a second service packet to the tail node through a first path, wherein the second service packet comprises a first IFIT option, the first IFIT option comprises first indication information, the first indication information is to indicate whether the tail node generates a service flow identification rule based on the configuration information, the service flow identification rule is to identify a service flow requiring IFIT, the service flow is transmitted through a second path, the second path is a forwarding path from the tail node to the head node, and the first path and the second path pass through a same intermediate node.

36. The network device according to claim 35, wherein the first BGP update packet comprises an SR Policy SAFI NLRI field, the SR Policy SAFI NLRI field comprises Tunnel Encaps Attribute comprising IFIT Attributes TLV;
the IFIT Attributes TLV comprises at least one sub-TLV that is to carry the configuration information.

37. The network device according to claim 36, wherein the at least one sub-TLV comprises a first sub-TLV, a value field of the first sub-TLV comprises a service flow identifier, a device node identifier, an extension flow monitor type flag, enabling information of the multiple second flow characteristics, and a tunnel-level enabling flag; the multiple second flow characteristics comprise a destination IP address, a source IP address, a DSCP, a protocol name, a destination port, and a source port; the enabling information of the multiple second flow characteristics comprises a destination IP address mask, a source IP address mask, a D-Flag, and an L4-Flag;
the extension flow monitor type flag comprises an F-Flag, and the F-Flag is to indicate whether to identify the enabling information of the multiple second flow characteristics;
the destination IP address mask is to indicate whether each bit comprised in the destination IP address is enabled;
the source IP address mask is to indicate whether each bit comprised in the source IP address is enabled;
the D-Flag is to indicate whether the DSCP is enabled;
the L4-Flag comprises 3 bits, a first bit is to indicate whether the protocol name is enabled, a second bit is to indicate whether the destination port is enabled, and a third bit is to indicate whether the source port is enabled.

38. The network device according to claim 37, wherein the at least one sub-TLV further comprises a second sub-TLV, and a value field of the second sub-TLV comprises a first flag, a second flag, a third flag and encapsulation information;
the first flag is to indicate whether the head node supports alternating coloring IFIT, the second flag is to indicate whether the head node supports enhanced alternating coloring IFIT, and the third flag is to indicate whether the head node supports dynamically establishing the service flow identification rule;
the encapsulation information comprises an H-Flag, a D-Flag, and an S-Flag, wherein the H-Flag is to indicate whether the head node supports encapsulating an IFIT option in a hop-by-hop header, the D-Flag is to indicate whether the head node supports encapsulating an IFIT option in a destination header, and the S-Flag is to indicate whether the head node supports encapsulating an IFIT option in an SRH.

39. The network device according to any one of claims 35 to 38, wherein the machine executable instructions further cause the processor to:
send a second BGP update packet to the tail node, wherein the second BGP update packet does not comprise the configuration information and is to instruct the tail node to delete the service flow identification rule.

40. A machine-readable storage medium, which stores machine-executable instructions thereon that, when called and executed by a processor, cause the processor to: implement the method according to any one of claims 1 to 13.

41. A computer program product, which causes a processor to implement the method according to any one of claims 1 to 13.
